# EUROPEAN PATENT APPLICATION

(11) **EP 2 088 055 A2**
(43) Date of publication of application: **12.08.2009**
(21) Application number: 08380332.0
(22) Date of filing: 11.12.2008
(51) Int. Cl.: B62B 9/12

(54) **A seat for an infant pushchair**

(30) Priority: 31.01.2008 ES 200800191 U
(71) Applicant: JANE S.A., 08184 Palau Solita I Plegamans (Barcelona) (ES)
(72) Inventor: Jane Santamaria, Manuel, 08184 Palau Solita I Plegamans Barcelona (ES)
(74) Representative: Pastells Teixido, Manuel

(57) **Abstract**

This seat comprises the very seat itself having a flexible make-up, and a backrest being supported on a plate being articulately linked to the sides of the frame corresponding to the backrest. This seat is characterised in that between the aforementioned plate and the seat an element is arranged which connects them to each other, this latter element being made up by a flexible, longitudinal piece (11).

## Description

### OBJECT OF THE INVENTION

A seat for an infant pushchair.

### BACKGROUND OF THE INVENTION

This seat is of the type comprising the very seat itself having a flexible make-up, the backrest frame being articulately linked to the frame of the very seat itself having been mentioned above, said backrest comprising a plate being articulately linked to the two sides of said backrest frame.

The aforementioned seats have the drawback that with the child's weight the seat flexes downwards and thus brings about a mutual approach of the two backrest frame sides and thereby a lifting of the aforementioned plate, a space being thus created between the lower edge of the plate and the seat, said space because of its size then being a hindrance for the proper support of the child and hence a cause of discomfort for this latter.

### SUMMARY OF THE INVENTION

It is an object of this invention to solve the aforementioned problem, an element being for such a purpose arranged between the backrest supporting plate and the seat in such a way as to connect them to each other, whereby the seat when being flexed in a downward direction draws along with it the aforementioned plate and thus prevents the creation of the problematic space between them.

This is a simple and effective solution, said connecting element being made up by a flexible, longitudinal piece.

These and other characterising features will be best made apparent by the following detailed description whose understanding will be made easier by the accompanying sheet of drawings showing a practical embodiment being cited only by way of example not limiting the scope of the present invention.

### DESCRIPTION OF THE DRAWINGS

In the drawings:
Figs. 1 and 2 illustrate in a front elevation the make-up of the conventional seat showing the problem;
Fig. 3 depicts in a perspective view the seat as per the invention; and
Fig. 4 shows in a front elevation how the problem is solved.

### DETAILED DESCRIPTION

According to the drawings the seat in question comprises the very seat itself (1) being flexible and securedly attached to the sides (2 and 3) of the frame supporting it, these latter sides having articulately linked to them the backrest frame sides (4 and 5), these latter in their turn having a central plate (6) articulately linked to them by means of four links (7, 8, 9 and 10).

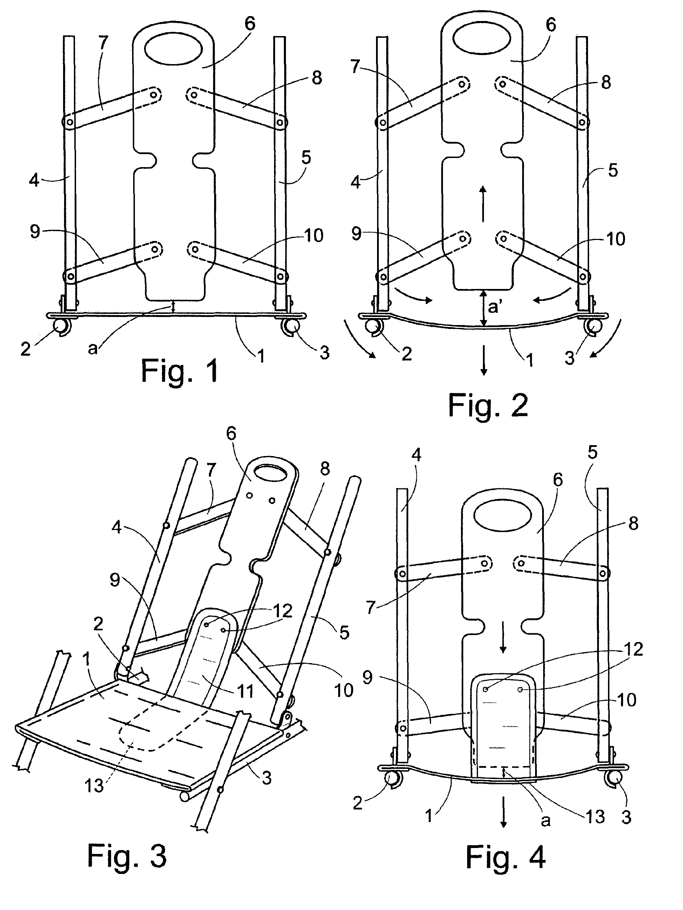

In Figs. 1 and 2 the conventional seat is shown in Fig. 1 without the presence of the child, a negligible space (a) being in that case left between the lower edge of the plate (6) and the seat (1).

With the child's weight the seat (1) is flexed in a downward direction (Fig. 2) and thus brings about an approach between the backrest frame sides (4 and 5), the plate (6) being thereby shifted upwards due to the pushing action of the links (7, 8, 9 and 10), a much bigger space (a') being thus created between the lower edge of the plate (6) and the seat (1), this being a not very advisable state.

In order to solve this problem and to avoid all discomfort for the child sitting in said seat this latter has been provided with the arrangement of an element (11) being such as to connect the plate (6) to the seat (1). Thus when the seat is flexed (Fig. 4) it draws along with it in a downward direction the plate (6), the small distance (a) between them being thus maintained.

The connecting element (11) is made up by a flexible, longitudinal piece being made for example of fabric or of a sufficiently reinforced plastics material and better still having an upholstering, said piece possibly being for example securedly attached to the plate (6) by means of rivets (12) and inferiorly attached to the seat at a sewn joint (13).

## Claims

1. A seat for an infant pushchair comprising the very seat itself (1) having a flexible make-up, and a backrest being supported on a plate (6) being articulately linked to the sides (4 and 5) of the frame corresponding to the backrest, **characterised in that** between the aforementioned plate (6) and the seat (1) an element (11) is arranged which connects them to each other.

2. A seat for an infant pushchair, as per claim 1, **characterised in that** said element (11) establishing the connection between the plate (6) and the seat (1) is made up by a flexible, longitudinal piece.
